(19) Europäisches Patentamt

European Patent Office

Office européen des brevets

(11) **EP 1 523 163 A1**

(12) **EUROPEAN PATENT APPLICATION**

(43) Date of publication:
**13.04.2005 Bulletin 2005/15**

(51) Int Cl.7: **H04M 1/725**

(21) Application number: **04292233.6**

(22) Date of filing: **17.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **19.09.2003 KR 2003065341
10.10.2003 US 510557 P**

(71) Applicant: **Bellwave Co., Ltd.
Seoul 135-270 (KR)**

(72) Inventors:
• **Yang, Ki-Gon
Banpo-dong Seoul . 137-811 (KR)**

• **Kang, Jeffrey-Han
San Diego California 92130 (US)**
• **Shin, Ki-Yeong
711 Dongjak-Ku Seoul, 156-855 (KR)**
• **Park, Hyun-Chul
Gangseo-Ku Seoul (KR)**

(74) Representative: **Texier, Christian et al
Cabinet Régimbeau
20, rue de Chazelles
75847 Paris cedex 17 (FR)**

(54) **Hand-held phone capable of providing various vibrations**

(57) The present invention relates to a portable terminal, such a hand-held phone, a smart phone or a PDA (personal digital assistant); and more particularly, to a portable terminal providing various vibrations for a user in response to different input event thereof. The portable terminal according to the present invention has a receiver for receiving a calling signal and external signals; a feature extractor for extracting a feature of the calling signal or the external signals; and only one vibration motor having an eccentrically balanced weight which is fixed at an end of the axis thereof, wherein the one vibration motor and the eccentrically balanced weight are controlled by a control signal from the Feature extractor and wherein the control signal is issued by the an extracted feature of the external signals. Although the present invention uses only one vibration motor, a behavior of the phone may have different vibration traces.

Fig.1

**Description**

Cross-Reference to Related Applications

This application claims the benefit of priority from prior Korean Patent Application No. 10-2003-0065341, filed September 19, 2003, and U.S. Provisional Application No. 60/510,557, filed October 10, 2003.

Field of the Invention

The present invention relates to a portable terminal, such a hand-held phone, a smart phone or a PDA (personal digital assistant); and more particularly, to a portable terminal providing various vibrations for a user in response to different input event thereof.

Description of the Related Arts

Generally, hand-held phones have a function to notify a call in order that a user (subscriber) can recognize such a call. Melody, vibration or lamp has been widely used as a call indicating media. In case where the melody is used as a call indicating media, a sound is selected from different music data stored in the hand-held phones. For example, the sound can be selected on a basis of a caller by allocating a specific sound to a specific caller.

However, being different from the melody indication, the vibration as an indicating media does not provide a variety of caller identification because the hand-held phones have just a single mode that provides a uniform vibration.

Summary of the Invention

An object of the present inventing is to provide a hand-held phone with different vibrations according to input events including a call.

Another object of the present inventing is to provide a hand-held phone with different vibrations using the minimum number of vibration motors.

According to an aspect of the represent invention, there is provided a portable communication apparatus comprising: first means for receiving a calling signal and external signals; second means for classifying a feature of the calling signal or the external signals; and third means for proving one of various vibration patterns for the portable communication apparatus based on the classified feature.

In the present invention, the second means includes: a feature extracting means for extracting sample data from the external signals; a storage means for storing a plurality of predetermined patterns; and a control means for comparing the sample data to one of the plurality of the predetermined patterns stored in the storage means and generating a control signal.

Also, the feature extracting means: a analogue-to-digital converter for converting analogue signals of the external signals into digital signals, wherein the digital signals are time-domain digital signals; a frequency domain converter for converting the digital signals from the analogue-to-digital converter into frequency domain signals; a logic means for summing neighboring frequency signals from the frequency domain converter and producing newly amplified frequency signals; a filter for removing noise signals from the newly amplified frequency signals, wherein an amplitude of the noise signal is less than that of a reference signal; and an accumulator for accumulating output signals from the filter on a basis of a frequency bandwidth, in order to form the sample data.

According to another aspect of the represent invention, there is provided a portable communication apparatus comprising: first means for receiving a calling signal and external signals; second means for classifying a feature of the calling signal or the external signals; and only one vibration motor having an eccentrically balanced weight which is fixed at an end of the axis thereof, wherein the one vibration motor and the eccentrically balanced weight are controlled by a control signal from the second means and wherein the control signal is issued by the a classified feature of the external signals.

According to still another aspect of the represent invention, there is provided a portable communication apparatus comprising: a RF circuit coupled to a wireless modem for processing a calling signal; a microphone for receiving external signals; a feature extracting means for extracting sample data from the external signals; a selection means for selecting one from vibration patterns stored in a memory based on the extracted feature in the feature extracting means; and a vibration means for proving a vibration for the portable communication apparatus in response to the selected vibration pattern.

Brief Description of the Drawings

The above and other objects and features of the present invention will become apparent from the following description of the preferred embodiments given in conjunction with the accompanying drawings, in which:

Fig. 1 is a block diagram illustrating a circuit to move a hand-held phone using a vibration motor;
Fig. 2a is a frequency spectrum of a melody input;
Fig. 2b is a graph showing a frequency spectrum of the melody input after filtering a noise;
Fig. 3 is a diagram illustrating eight division sections of input bandwidths;
Fig. 4 is a diagram illustrating three section groups of input bandwidths;
Figs. 5a to 5f are perspective views illustrating various positions of a hand-held phone;

Fig. 6 is a schematic view of a vibration motor having an eccentrically balanced weight;

Fig. 7 is a schematic diagram illustrating a tilted vibration motor in the (X, Y, Z) space of the phone;

Figs. 8a and 8b are schematic diagrams illustrating angular velocity of rotation axis of the vibration motor;

Fig. 9 is a diagram illustrating a center of gravity of the phone and eight division spaces in the phone;

Figs. 10a and 10b are graphs illustrating variation of a center of gravity and angle of the phone when the eccentrically balanced weight has an angular velocity of $/\omega$ ($=\omega_x X + \omega_y Y + \omega_z Z$) in the (X, Y, Z) space and the phone rotates on a Z-axis;

Fig. 11 is a diagram illustrating a trace of the phone of Fig. 10a and 10b;

Figs. 12a and 12b are graphs illustrating variation of a center of gravity and rotation angle of the phone when the eccentrically balanced weight has an angular velocity of $/\omega$ ($=\omega_x X + \omega_y Y + \omega_z Z$) in the (X, Y, Z) space and the phone rotates on an X-axis;

Figs. 13a and 13b are graphs illustrating variation of a center of gravity and rotation angle of the phone when the eccentrically balanced weight has an angular velocity of $/\omega$ ($=\omega_x X + \omega_y Y + \omega_z Z$) in the (X, Y, Z) space and the phone rotates on an Y-axis;

Figs. 14a and 14b are graphs illustrating variation of a center of gravity and rotation angle of the phone when the eccentrically balanced weight has an angular velocity of $/\omega$ ($=-\omega_x X - \omega_y Y + \omega_z Z$) in the (X, Y, Z) space and the phone rotates on the Z-axis;

Figs. 15a and 15b are graphs illustrating variation of a center of gravity and rotation angle of the phone when the eccentrically balanced weight has an angular velocity of $/\omega$ ($=-\omega_x X - \omega_y Y + \omega_z Z$) in the (X, Y, Z) space and the phone rotates on the X-axis;

Figs. 16a and 16b are graphs illustrating variation of a center of gravity and rotation angle of the phone when the eccentrically balanced weight has an angular velocity of $/\omega$ ($=-\omega_x X - \omega_y Y + \omega_z Z$) in the (X, Y, Z) space and the phone rotates on the Y-axis;

Fig. 17 is a schematic diagram illustrating a tilted vibration motor in which the eccentrically balanced weight has an angular velocity of $/\omega$ ($=-\omega_x X - \omega_y Y + \omega_z Z$) in the (X, Y, Z) space;

Fig. 18 is a schematic diagram illustrating a variation of centrifugal force when the eccentrically balanced weight rotates;

Fig. 19a shows the locus of movement of a handphone based on the initial angle of the weight when rotated around the Z-axis;

Fig. 19b shows the locus of movement of a handphone based on the initial angle of the weight when rotated around the X-axis;

Fig. 19c shows the locus of movement of a handphone based on the initial angle of the weight when rotated around the Y-axis; and

Fig. 20 is a graph illustrating the trace of the phone on the Z-axis when the angle of the eccentrically balanced weight is varied in a range of 0 degree to 360 degrees.

Detailed Description of Preferred Embodiments of the Invention

Hereinafter, a hand-held phone according to the present invention will be described in detail accompanying drawings. Although the present invention will be described in the hand-held phone, it can be applied to portable digital signal receivers, such as a smart phone and a PDA.

The present invention provides a function through which a user recognizes a state of the hand-held phone. Also, the phone according to the present invention employs a vibration motor to implement such a function. The reason why the vibration motor is employed is that the vibration motor can provide a state of the hand-held phone for the user with a visual and physical reorganization. Furthermore, the hand-held phone according to the present invention includes a phone moving apparatus, which has a vibration motor and a control signal generator. The control signal generator extracts an input signal feature from input signals and the vibration motor provides the extracted feature for the user through different kinds of vibrations.

In the present invention, the phone moving apparatus can operate under the control of a control signal from the control signal generator and an alarm signal as well as a call signal. The phone moving apparatus is also controlled in response to bell sounds, such as rings of song and melody, and a peripheral sound. It should be noted that the hand-held phone is responsive to a call as well as specific input signals.

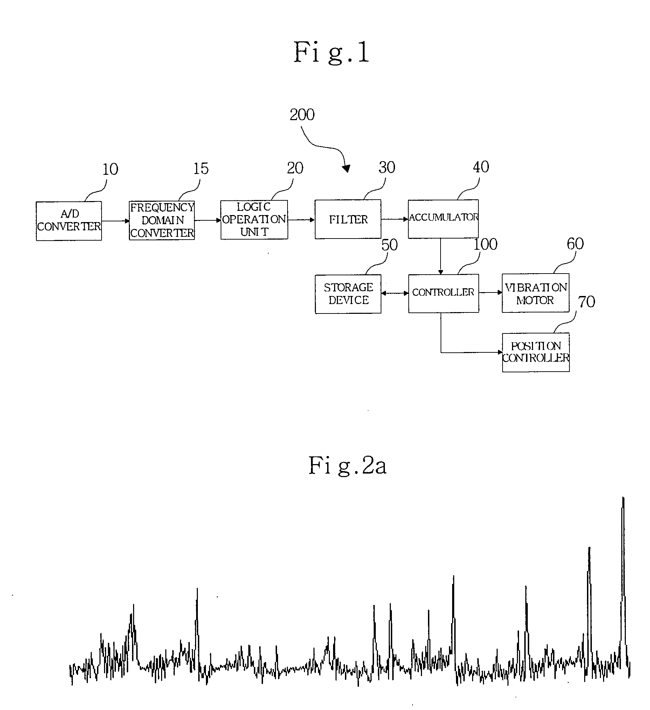

Referring to Fig. 1, a hand-held phone according to the present invention includes a phone moving apparatus 200 to provide a user with information about states of the phone. The phone moving apparatus 200 also includes an analogue-to-digital (A/D) converter 10 to convert input analogue signals into digital signals, a frequency domain converter 15, a logic operation unit 20, a filter 30, an accumulator 40, a storage device 50, a controller 100, a vibration motor 60 and a position controller 70.

The controller 100 controls the entire operation of the storage device 50, the vibration motor 60 and the position controller 70. Also, the controller 100 controls them according to the kinds of input data passing through the A/D converter 10. That is, it detects whether a sound is inputted into the phone and controls the vibration motor 60 and/or the position controller 70 according to the input sound (input event).

The A/D converter 10 converts the input analogue signals into the digital signals. In case where the analogue signal is a receiving call via a wireless network system, it is received via a RF (Radio Frequency) circuit (not shown), and, in case where the analogue signal is a background sound or any other voice with which the user is associated, it is received via a microphone equipped in the phone.

The frequency domain converter 15 carries out Fourier Transform of the sampled data from the A/D converter 10, thereby converting a time-based bandwidth into a frequency-based bandwidth.

The logic operation unit 20 produces a new frequency level (amplitude) involved in a current frequency bandwidth, by summing a current frequency bandwidth and preceding and following frequency bandwidths. This summation is carried out to increase SNR (signal-to-noise ratio). In the preferred embodiment of the present invention, although the summation is applied to the logic operation unit 20, any other application can be used to increase the SNR which guarantees a peak detection of the input sound, which is well known to the ordinary skilled in the art to which the subject pertains. For example, a multiplication can be applied to the increase of the SNR.

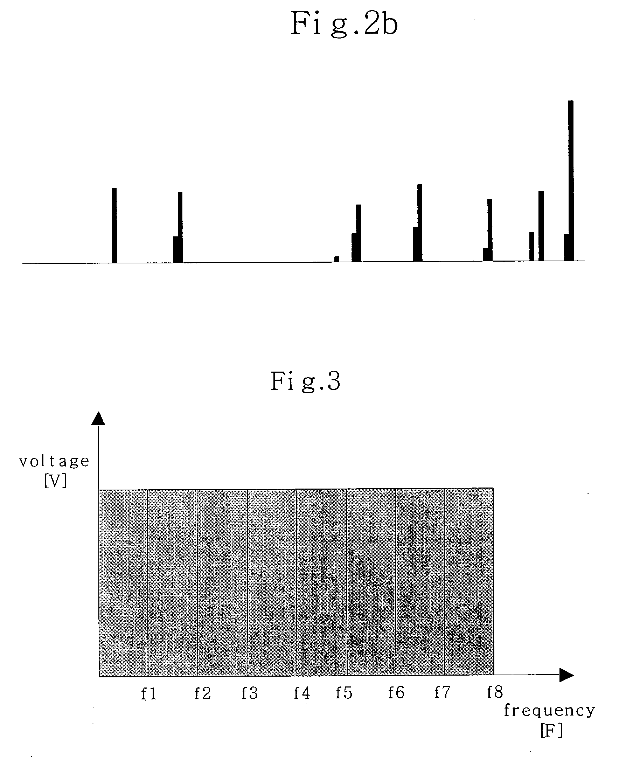

The filter 30 removes a low amplitude frequency which is below a predetermined level. If the amplitude of the frequency from the frequency domain converter 15 is below the predetermined level, the filter 30 removes such a low amplitude frequency so that high amplitude frequency is selected as shown as shown in Fig. 2b. As a result, a low amplitude frequency in Fig. 2a is removed as shown in Fig. 2b.

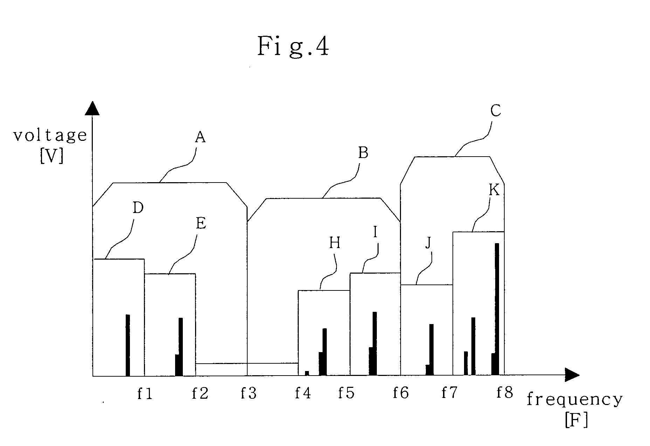

The accumulator 40, as shown in Figs. 3 and 4, accumulates outputs from the filter 30. A low frequency bandwidth (A), a middle frequency bandwidth (B) and a high frequency bandwidth (C) are shown in Fig. 4. Also, the low frequency bandwidth (A) is divided into three sub-bandwidths D, E and F, the middle frequency bandwidth (B) is divided into three sub-bandwidths G, H and I and the high frequency bandwidth (C) is divided into two sub-bandwidths J and K. The accumulator 40 accumulates outputs from the filter 30 for a predetermined time on a basis of the sub-bandwidth. If an accumulated value is over a reference value in the sub-bandwidth, a control signal to rotate a vibration motor is issued in the controller 100 and then the accumulator 40 is cleared and initialized. The present invention can operate on a basis of the frequency bandwidth (A, B and C) or sub-bandwidth (D, E, F, G, H, I, J and K). To obtain a sophisticated pattern analysis, the present invention may operate on a basis of the sub-bandwidth (D, E, F, G, H, I, J and K).

The controller 100 extracts features of outer events (external inputs), which are inputted into the hand-held phone, and inner events that happen in the hand-held phone. For example, the inner events may be a call, an alarm, a melody, a sound effect and the like and the external inputs, which are inputted into the hand-held phone by a microphone thereof, may be sounds and vocal instructions

In the present invention, when an event (inner or outer event) is inputted, the frequency bandwidth corresponding to the event should be searched. To search for the corresponding frequency bandwidth, an analogue input signal of the event is converted into a digital signal in the A/D converter 10 in Fig. 1. The frequency domain converter 15 converts the time-domain digital signals from the A/D converter 10 into the frequency-domain digital signals. The converted signals in the frequency domain converter 15 are shown in Fig. 2a. The converted data in the frequency domain converter 15 have a noise. In Fig. 2a, a high peak having a high voltage amplitude is produced by the events and the amplitude of the noise is relatively lower than that of the event.

The converted signals from the frequency domain converter 15 are inputted into the logic operation unit 20. The logic operation unit 20 newly sets up a new current frequency as follows:

New current frequency = Current frequency +

preceding frequency + following frequency

This operation in the logic operation unit 20 increases the SNR against external environments of the hand-held phone. Although the summation of the neighboring bandwidths is employed in the preferred embodiment of the present invention, it is possible to improve the SNR using the multiplication. The filter 30 removes background noises passing through the logic operation unit 20. Since most noises are less than a reference value, the filter 30 can effectively select the real input data. The output data waveform of the filter 30 is shown in Fig. 2b.

The output data from the filter 30 are allocated to a corresponding sub-frequency bandwidth. Accordingly, the input frequency is allocated to one of eight sub sub-frequency bandwidths and Fig. 3 is a graph illustrating the allocation of the eight sub sub-frequency bandwidths. In the preferred embodiment of the present invention, the selection of the input frequency is carried out based on the amplitude, but it is possible to select the input frequency based on different factors, for example, melody pattern, melody pattern variation, tone or their mixture. These selection factors can be modified by the user's inclination and, since such a modification is beyond the present invention, it will be omitted.

When the input events having a fast pattern, which is over at least two sub-frequency bandwidth, are inputted, the variation of the events appears fast in each of sub-frequency bandwidths (D, E, F, G, H, I, J and K). On the contrary, the slow input events slowly appear in each of sub-frequency bandwidths (D, E, F, G, H, I, J and K). Based on the input events, the pattern variation can be detected in a rhythm or speed and the hand-held phone can be responsive to the pattern variation. The variation in a tone and amplitude can be detected by a level detector (not shown) and the variation in the pattern speed can be detected by the accumulator 40.

The input pattern variation in the sub-frequency bandwidths D, E, F, G, H, I, J and K causes another variation in the frequency bandwidths A, B and C. It is possible to detect, through the input event variation in the frequency bandwidths A, B and C, how the input frequency is distributed. Although it is possible to control the vibration motor 60 directly by detecting the input event variation, the control of the vibration motor 60 can be achieved via a memory. That is, the control of the vibration motor 60 can be executed based on a predetermined pattern, which is had been stored in a memory, and the detected pattern variation.

The controller 100 coupled to the accumulator 40 and the memory 50 controls the vibration motor 60 and the position controller 70. The vibration motor 60 provides the hand-held phone with a movement or a rotation power.

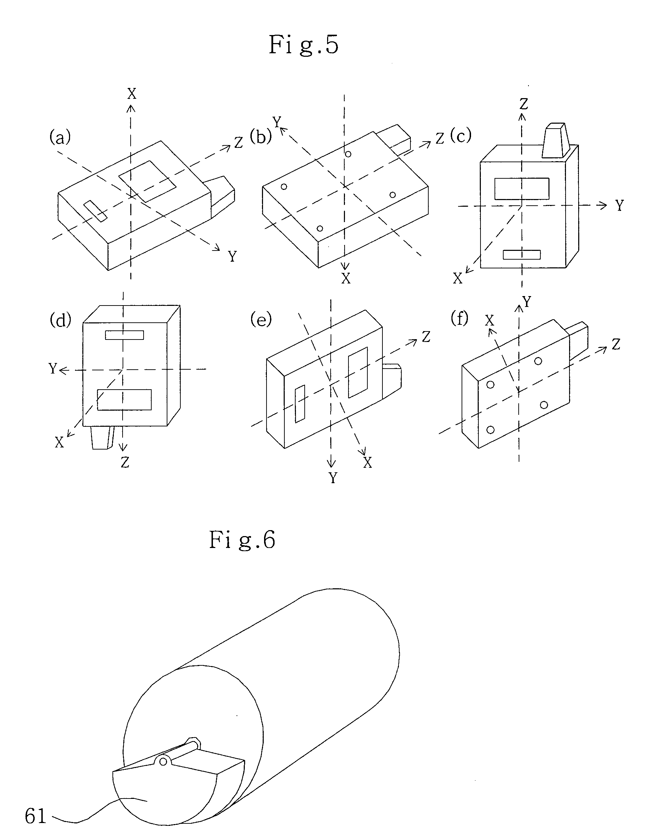

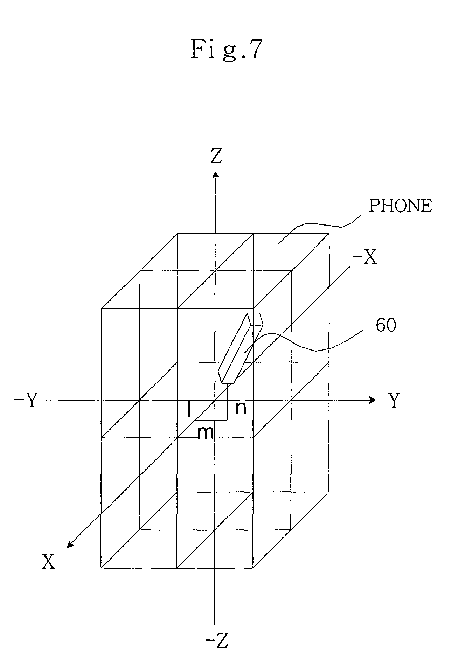

Referring to Fig. 6, the vibration motor 60 has an eccentrically balanced weight 61. Further, as shown in Fig. 7, the vibration motor 60 deviates from the center of gravity of the hand-held phone and the rotation axis of the vibration motor 60 is not in parallel to any of X, Y and Z axes of the hand-held phone. The axis of the vibration motor 60 is disposed toward the center of gravity of the phone.

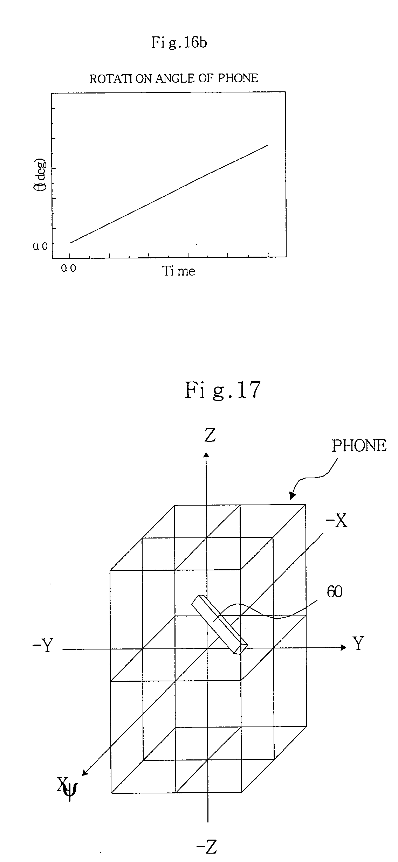

Meanwhile, as shown in Fig. 17, the axis of the vibration motor 60 may not be disposed toward the center of gravity of the phone. This difference in the direction of the axis of the vibration motor 60 between Figs. 7 and 17 provides a difference in their monuments caused by the vibration of the vibration motor 60. In case where the vibration motor 60 is disposed in the center of gravity of the phone, the phone may move at the same position as if the phone itself vibrates. In case where the vibration motor 60 is disposed apart from the center gravity as shown in Fig. 7, the phone can move along an arc.

The position controller 70 controls the vibration motors 60 so that the eccentrically balanced weight 61 is set to a specific position. The position controller 70 makes the eccentrically balanced weight 61 fixed at a specific position. If the eccentrically balanced weight 61 is not fixed, starting points of it are not constant and the movements of the phone can be different even if the same event is input into the phone. Accordingly, the present invention provides the position controller 70, such as a potential meter, a fixing pin or an electromagnet. If the eccentrically balanced weight 61 may be secured on a specific position by the gravity and the user wants to have such a limited function, it is possible to eliminate the position controller 70 from the phone.

Although only one vibration motor 60 is employed in this embodiment, a plurality of vibration motors, which are systematically arranged around a center of gravity of the phone, may be used to provide different movements of the phone. When the plurality of vibration motors are symmetrically arranged around the center of gravity of the phone, an effective moving control of the phone can be obtained.

In general, the hand-held phones are formed in a type of hexahedron. The present invention makes the phone move, irrespective of the state of the phone which is put on a table (or bottom). Referring to Figs. 5a to 5f, the phone can have various bottom surfaces on the table. Assuming that the direction of positive X-axis of the phone is fixed and is toward an upper surface of the phone in Fig. 5a, the positive X-axis of the phone in Fig. 5b is toward a bottom surface and the positive X-axis of the phone in Fig. 5c is toward a front surface. In order to move the phone put on a table, the vibration motor 60 should rotate in a parallel to the vertical axis of the phone. That is, in Figs. 5a and 5b, the vibration motor 60 should rotate in a parallel to the X-axis. In similar, in Figs. 5 c and 5d, the vibration motor 60 should rotate in a parallel to the Z-axis and, in Figs. 5e and 5f, the vibration motor 60 should rotate in a parallel to the Y-axis.

Accordingly, three vibration motors are required to move the phone in all directions of the phone, irrespective of the bottom position. However, this method using three vibration motors is expensive and is not effective because of a large size and weight thereof.

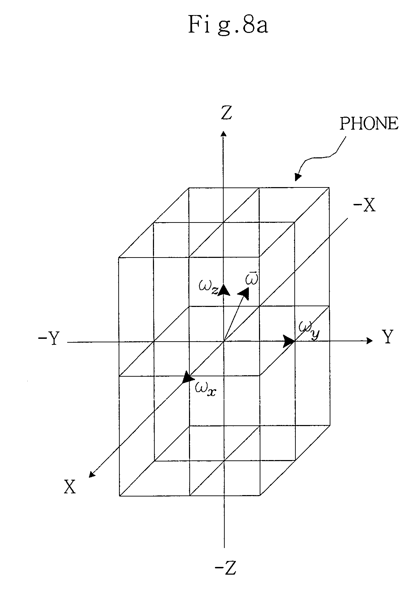

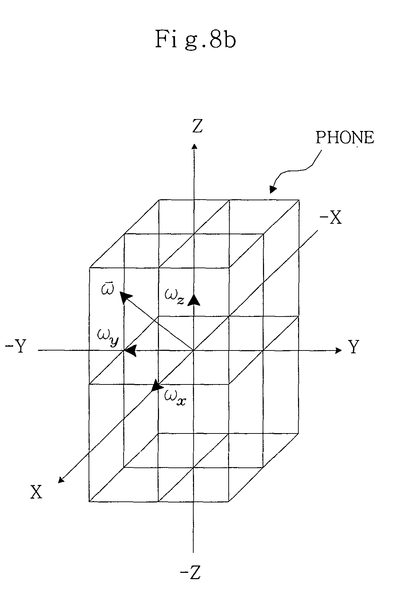

In this invention, just only one vibration motor is employed to move the phone in all directions. As shown in Figs. 7 and 17, only one tilted vibration motor 60 is employed in this invention. The tilted vibration motor 60 according to the present invention can produce various moments for all directions, irrespective of the state of the phone which is put on a table (Figs. 8a and 8b). Since the vibration motor 60 has the eccentrically balanced weight 61, the rotation of the eccentrically balanced weight 61 causes a centrifugal force in the phone and the phone may be moved by a moment from the centrifugal force. In most cases, since the phone may be horizontally put on a table, the number and position of the vibration motor 60 to be used in the phone can be considered based on such a horizontal position of the phone. In the preferred embodiment, the eccentrically balanced weight 61 is tilted to the center of gravity of the phone and the eccentrically balanced weight 61 is at an angle of 45 degrees to the X-Y plane. The amount of angle (45 degrees) makes the same force in each of the X-, Y- and Z-axes.

Three criteria are required to move the phone in the various directions using only one vibration motor. First, the rotation of the eccentrically balanced weight 61 must include X, Y and Z components so that the moment of the eccentrically balanced weight 61 may have an effect on each of X, Y and Z axes. In Fig. 8, the angular velocity ($/\omega$) of the rotation axis of the eccentrically balanced weight 61 is as follows:

$$/\omega = \omega_x X + \omega_y Y + \omega_z Z \ (/\omega\text{:angular velocity})$$

Since the eccentrically balanced weight 61 rotating at an arbitrary axis has various components of X-, Y- and Z-axes, the rotation has the components of all axes. The eccentrically balanced weight 61 rotating on each axis makes a centrifugal force distributed to all axes and a moment for the center of gravity is then created by the distributed centrifugal force. The eccentrically balanced weight 61 has a moment on the X-, Y-and Z-axes in Fig. 8a and has a moment on the X-, -Y- and Z-axes in Fig. 8b. The velocity of rotation and the direction of the eccentrically balanced weight 61 create an arbitrary movement of the phone.

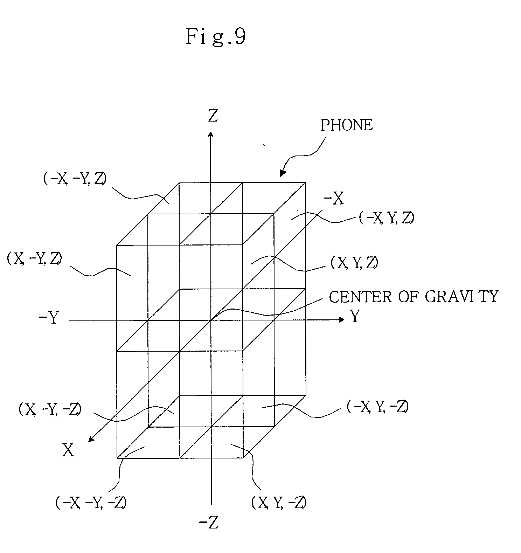

Second, where is the vibration motor 60 having an arbitrary tilted angle positioned around the center of gravity? The position of the vibration motor 60 can be indicated by the distances (l, m and n) from the center of gravity. The inner space of the phone can be divided into eight division spaces as shown in Figs. 7 and 9. In Fig. 7, the eccentrically balanced weight 61 is disposed in the (X, Y, Z) space with the distances (l, m and n) from the center of gravity. Since the position of the eccentrically balanced weight 61 is an important factor, the position of it must be controlled by the predetermined moving pattern of the phone. In particular, since the present invention uses only one vibration motor, the distance from the center of gravity must be controlled.

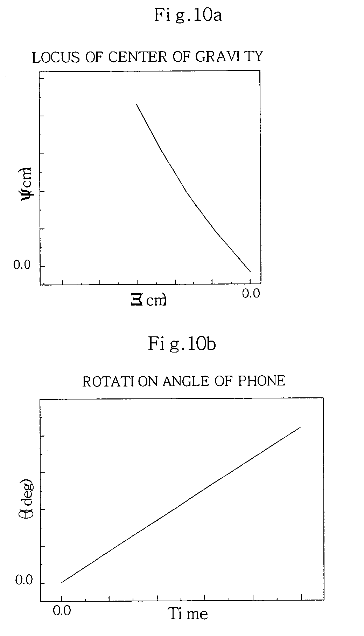

As shown in Fig. 7, where the vibration motor 60 is positioned in the (X, Y, Z) space, the vector of the angular velocity is $/\omega=\omega_x X + \omega_y Y + \omega_z Z$. Figs. 10a, 12a, and 13a show the rotation of the phone on the Z-axis, X-axis and Y-axis, respectively.

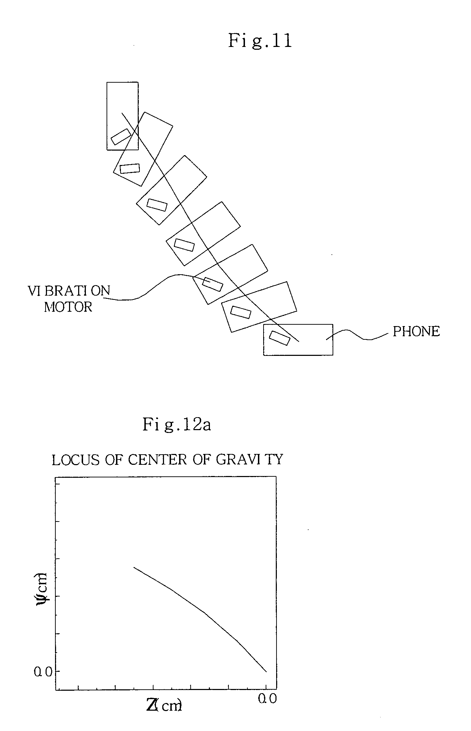

Fig. 10a shows the movements of the phone (the center of gravity of the phone) when the phone is positioned in the X-Y plane as shown in Fig. 5c and Fig. 10b shows that the rotation angle of the phone rotates from 0 degree to 85 degrees on the Z-axis. Fig. 11 shows the trace of the phone which is illustrated in Figs. 10a and 10b.

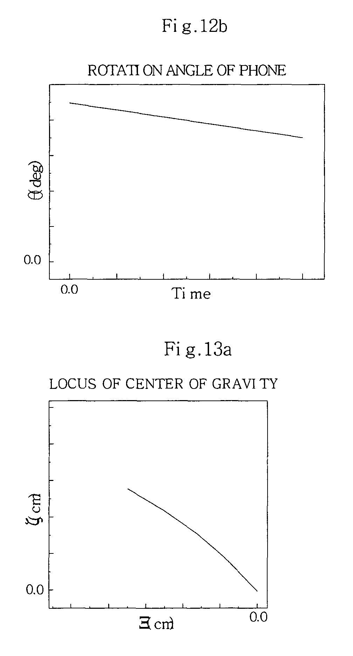

Fig. 12a shows the movements of the phone (the center of gravity of the phone) when the phone is positioned in the Y-Z plane as shown in Figs. 5a and 5b and Fig. 12b shows that the rotation angle of the phone on the X-axis rotates from 0 degree to 21 degrees. At this time, the traces of the phones in Figs. 5a and 5b are similar to each other as shown in Fig. 11; however, they are opposite to each other in the direction of rotation.

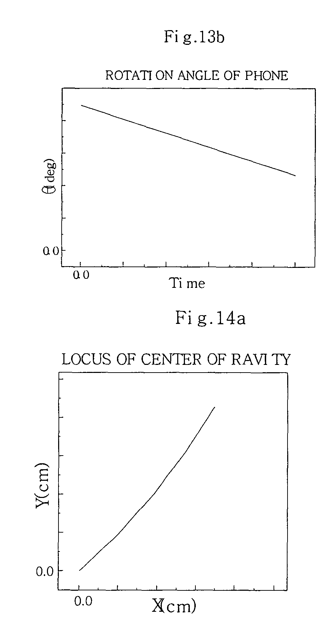

Fig. 13a shows the movements of the phone (the center of gravity of the phone) when the phone is positioned in the X-Z plane as shown in Figs. 5e and 5f and Fig. 13b shows that the rotation angle of the phone on the Y-axis rotates from 0 degree to 44 degrees. Likewise, the traces of the phones in Figs. 5e and 5f are similar to each other as shown in Fig. 11; however, they are opposite to each other in the direction of rotation.

Figs. 14a, 14b, 15a, 5b, 16a and 16b respectively show the behavior of the phone when the vibration motor has an angular velocity ($/\omega=-\omega_x X - \omega_y Y + \omega_z Z$) in the (X, Y, Z) space.

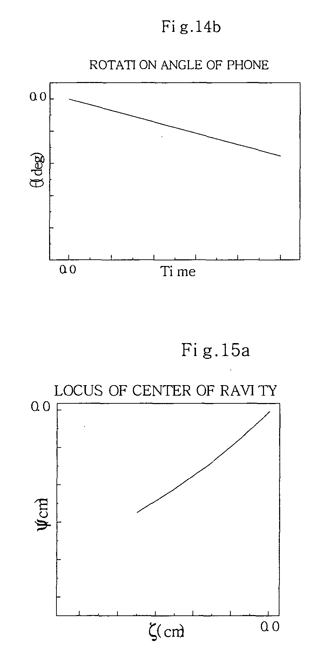

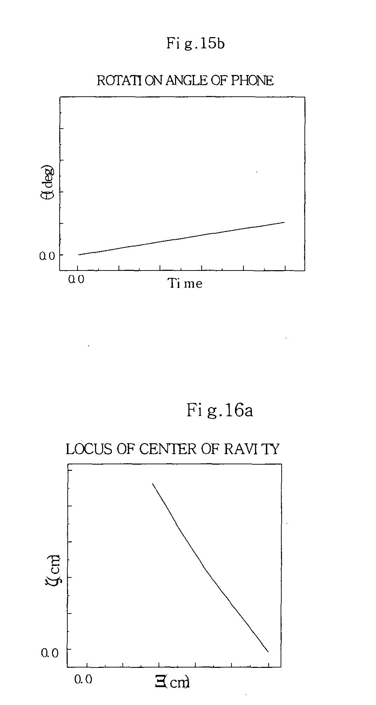

Fig. 14a shows the movements of the phone (the center of gravity of the phone) when the phone is positioned in the X-Y plane as shown in Fig. 5c and Fig. 14b shows the rotation angle of the phone on the Z-axis. Fig. 15a shows the movements of the phone (the center of gravity of the phone) when the phone is positioned in the Y-Z plane as shown in Figs. 5a and 5b and Fig. 15b shows the rotation angle of the phone on the X-axis. Fig. 16a shows the movements of the phone (the center of gravity of the phone) when the phone is positioned in the X-Z plane as shown in Figs. 5e and 5f and Fig. 16b shows the rotation angle of the phone on the Y-axis.

As stated above, the behavior of the phone may have different traces based on the position of the eccentrically balanced weight 61. Since the vibration motor 60 is tiled to each of the X-, Y- and Z-axes, the phone has different traces with only one vibration motor. These different behaviors of the phone can notify the user of the kind of the input event, for example, a massage, a specific notification, a call and the like.

Generally, the change of the rotation in the vibration motor 60 makes the trace of the phone changed. The direction of rotation of the phone is the same as that of the vibration motor 60. In case where the rotation axis of the vibration motor 60 is toward the center of gravity of the phone or not, the movements of the phones are changed. Namely, if other conditions are the same and the directions of the rotation axes are different, the movements of the phones are different from each other.

Third, the trace of the phone can be changed by the starting position of the eccentrically balanced weight 61 in the vibration motor 60.

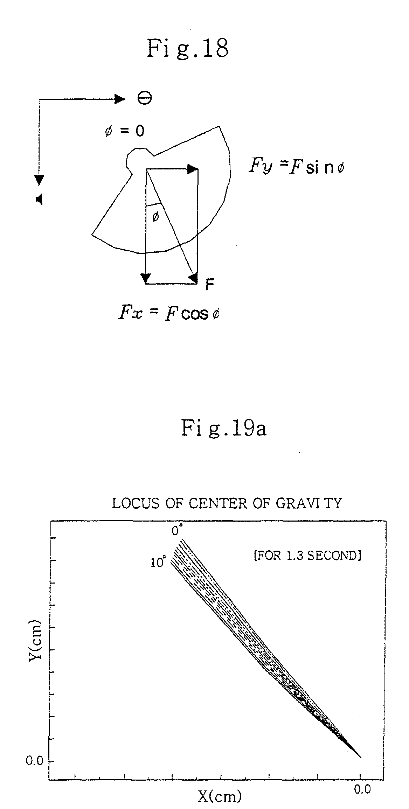

The centrifugal force F of the eccentrically balanced weight 61 is shown in the X-Y Cartesian coordinate of Fig. 18. In Fig. 18, when time "t" is zero (0) and then the centrifugal force F does not exist because of φ=0. When the eccentrically balanced weight 61 rotates up to an arbitrary angle of φ, the centrifugal force F has an X-directional force, Fx (Fsinφ), and a Y-directional force, Fy (Fcosφ). Also, it is possible to change the center of gravity of the phone by changing the angular velocity and the initial position of the eccentrically balanced weight 61. The change of the angle φ causes the change of the centrifugal force F and this change of the centrifugal force F makes the change of the trace of the phone.

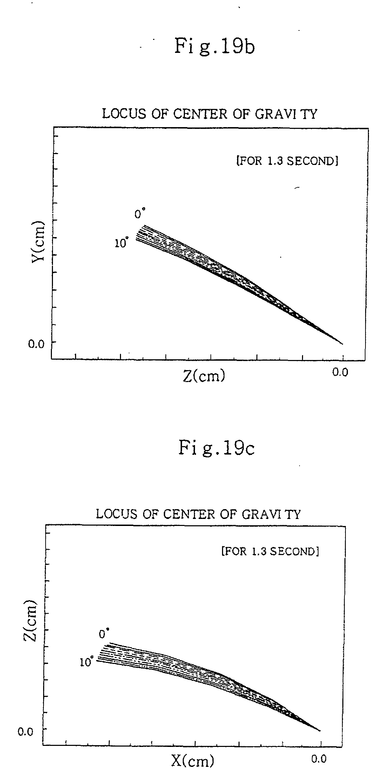

The change of the moment to the center of gravity in the phone causes the change of the trace of the phone. Figs. 19a to 19c are graphs illustrating the change of the moment of the phone according to the initial position of the eccentrically balanced weight 61 of Fig. 7. Figs. 19a to 19c show the traces of the phones which are taken on the Z-, X- and Y-axes in Figs. 5c, 5a and 5e, respectively.

Figs. 10a and 10b corresponding to Fig. 5c show the trace of the phone, when the vibration motor 60 is positioned as shown in Fig, 7 and the initial angle of the eccentrically balanced weight 61 is set to zero, and Fig. 19a is a graph illustrating the trace of the phone on the Z-axis when the angle of the eccentrically balanced weight 61 is varied in a range of 0 degree to 10 degrees.

Figs. 12a and 12b, which are correspondent to Figs. 5e and 5f, respectively, show the trace of the phone, when the vibration motor 60 is positioned as shown in Fig, 7 and the initial angle of the eccentrically balanced weight 61 is set to zero, and Fig. 19c is a graph illustrating the trace of the phone on the Y-axis when the angle of the eccentrically balanced weight 61 is varied in a range of 0 degree to 10 degrees.

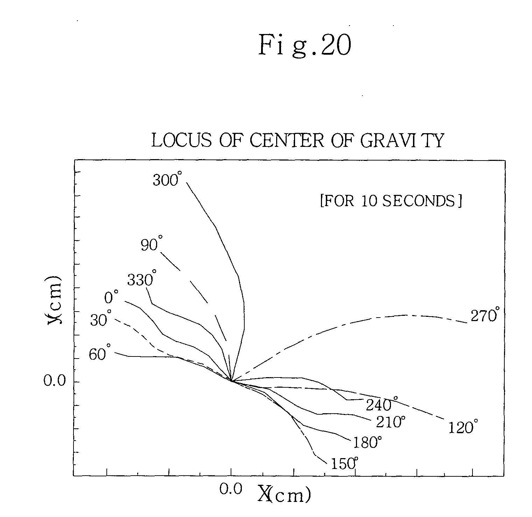

Furthermore, Fig. 20 is a graph illustrating the trace of the phone on the Z-axis when the angle of the eccentrically balanced weight 61 is varied in a range of 0 degree to 360 degrees. In Fig. 20, the trace of the phone is carried out for 10 seconds.

As apparent from the above, the control of the initial angle of the eccentrically balanced weight makes it possible control the trace of the phone. The eccentrically balanced weight can be controlled by an electrical signal which is correspondent to a mechanical potential variation. For example, a potential meter and a rotary encoder and an optical rotary encoder can be employed as a controller to control the initial angle of the eccentrically balanced weight 61.

The various moving pattern of the phone can be achieved by controlling the position of the vibration motor and the initial angle of the eccentrically balanced weight within the vibration motor. Further, in order to provide more efficient moving pattern of the phone, at least two vibration motors can be employed therein.

While the present invention has been described with respect to the particular embodiments, it will be apparent to those skilled in the art that various changes and modifications may be made without departing from the scope of the invention as defined in the following claims.

**Claims**

1. A portable communication apparatus comprising:

   first means for receiving a calling signal and external signals;
   second means for classifying a feature of the calling signal or the external signals; and
   third means for proving one of various vibration patterns for the portable communication apparatus based on the classified feature.

2. The portable communication apparatus as recited in claim 1, wherein the second means includes:

   a feature extracting means for extracting sample data from the external signals;
   a storage means for storing a plurality of predetermined patterns; and
   a control means for comparing the sample data to one of the plurality of the predetermined patterns stored in the storage means and generating a control signal.

3. The portable communication apparatus as recited in claim 2, wherein the feature extracting means:

   a analogue-to-digital converter for converting analogue signals of the external signals into digital signals, wherein the digital signals are time-domain digital signals;
   a frequency domain converter for converting the digital signals from the analogue-to-digital converter into frequency domain signals;
   a logic means for summing neighboring frequency signals from the frequency domain converter and producing newly amplified frequency signals;
   a filter for removing noise signals from the newly amplified frequency signals, wherein an amplitude of the noise signals are less than that of a reference signal; and
   an accumulator for accumulating output signals from the filter on a basis of a frequency bandwidth, in order to form the sample data.

4. The portable communication apparatus as recited in claim 1, wherein the third means includes a vibration motor of which a center position deviates from a center of gravity of the portable communication apparatus.

5. The portable communication apparatus as recited in claim 4, wherein the vibration motor includes an eccentrically balanced weight which is fixed at an end of the axis thereof.

6. The portable communication apparatus as recited in claim 5, wherein a rotation axis of the vibration motor is not in parallel to any one of X-, Y- and Z-axes of the portable communication apparatus.

7. The portable communication apparatus as recited in claim 5, wherein the vibration motor further includes a position meter to control a position of the eccentrically balanced weight and wherein the position meter is controlled by the second means.

8. The portable communication apparatus as recited in claim 1, wherein the third means includes a plurality of vibration motors, each of which deviates from a center of gravity of the portable communication apparatus.

9. The portable communication apparatus as recited in claim 8, wherein each of the vibration motors includes an eccentrically balanced weight which is fixed at an end of the axis thereof.

10. The portable communication apparatus as recited in claim 9, wherein a rotation axis of each of the vibration motors is not in parallel to any one of X-, Y- and Z-axes of the portable communication apparatus.

11. The portable communication apparatus as recited in claim 9, wherein each of the vibrations motor further includes a position meter to control a position of the eccentrically balanced weight and wherein the position meter is controlled by the second means.

12. The portable communication apparatus as recited in claim 11, wherein the plurality of vibration motors are systematically arranged around a center of gravity of the portable communication apparatus.

13. A portable communication apparatus comprising:

first means for receiving a calling signal and external signals;
second means for classifying a feature of the calling signal or the external signals; and
only one vibration motor having an eccentrically balanced weight which is fixed at an end of the axis thereof, wherein the one vibration motor and the eccentrically balanced weight are controlled by a control signal from the second means and wherein the control signal is issued by the a classified feature of the external signals.

14. The portable communication apparatus as recited in claim 13, wherein the second means includes:

a feature extracting means for extracting sample data from the external signals;
a storage means for storing a plurality of predetermined patterns; and
a control means for comparing the sample data to one of the plurality of the predetermined patterns stored in the storage means and generating the control signal.

15. The portable communication apparatus as recited in claim 14, wherein the feature extracting means:

a analogue-to-digital converter for converting analogue signals of the external signals into digital signals, wherein the digital signals are time-domain digital signals;
a frequency domain converter for converting the digital signals from the analogue-to-digital converter into frequency domain signals;
a logic means for summing neighboring frequency signals from the frequency domain converter and producing newly amplified frequency signals;
a filter for removing noise signals from the newly amplified frequency signals, wherein an amplitude of the noise signals are less than that of a reference signal; and
an accumulator for accumulating output signals from the filter on a basis of a frequency bandwidth, in order to form the sample data.

16. The portable communication apparatus as recited in claim 13, wherein the third means includes a vibration motor of which a center position deviates from a center of gravity of the portable communication apparatus.

17. The portable communication apparatus as recited in claim 13, wherein a rotation axis of the vibration motor is not in parallel to any one of X-, Y- and Z-axes of the portable communication apparatus.

18. A portable communication apparatus comprising:

a RF circuit coupled to a wireless modem for processing a calling signal;
a microphone for receiving external signals;
a feature extracting means for extracting sample data from the external signals;
a selection means for selecting one from vibration patterns stored in a memory based on the extracted feature in the feature extracting means; and
a vibration means for proving a vibration for the portable communication apparatus in response to the selected vibration pattern.

19. The portable communication apparatus as recited in claim 18, wherein a feature extracting means includes a means for increasing a SNR for the external signals, wherein the means includes:

a logic circuit for summing neighboring external signals; and
a filter for filtering the summation signals.

20. The portable communication apparatus as recited in claim 18, wherein the vibration means includes a vibration motor of which a center position deviates from a center of gravity of the portable communication apparatus, wherein the vibration motor includes an eccentrically balanced weight which is fixed at an end of the axis thereof, and wherein a rotation axis of the vibration motor is not in parallel to any one of X-, Y- and Z-axes of the portable communication apparatus.

# Fig.1

# Fig.2a

# Fig.2b

# Fig.3

Fig.4

Fig.5

(a)

(b)

(c)

(d)

(e)

(f)

Fig.6

61

Fig.7

# Fig.8a

Fi g.8b

Fig.9

Z

PHONE

(-X, -Y, Z)

-X

(-X, Y, Z)

(X, -Y, Z)

(X, Y, Z)

CENTER OF GRAVITY

-Y

Y

(X, -Y, -Z)

(-X, Y, -Z)

X

(-X, -Y, -Z)

(X, Y, -Z)

-Z

Fi g.10a

LOCUS OF CENTER OF GRAVI TY

Fi g.10b

ROTATI ON ANGLE OF PHONE

Fig.11

VIBRATION
MOTOR

PHONE

Fig.12a

LOCUS OF CENTER OF GRAVITY

Fig.12b

ROTATION ANGLE OF PHONE

θ(deg)

0.0

0.0          Time

Fig.13a

LOCUS OF CENTER OF GRAVITY

ζ(cm)

0.0

0.0

Ξ(cm)

Fig.13b

ROTATION ANGLE OF PHONE

Fig.14a

LOCUS OF CENTER OF RAVITY

Fig.14b

ROTATION ANGLE OF PHONE

θ(deg)

0.0

0.0    Time

Fig.15a

LOCUS OF CENTER OF RAVITY

ψ(cm)

0.0

ζ(cm)    0.0

Fig.15b

ROTATION ANGLE OF PHONE

Fig.16a

LOCUS OF CENTER OF RAVITY

Fig.16b

ROTATION ANGLE OF PHONE

Fig.17

## Fig.18

$$Fy = F \sin \phi$$

$$Fx = F \cos \phi$$

## Fig.19a

LOCUS OF CENTER OF GRAVITY

[FOR 1.3 SECOND]

## Fig.19b

LOCUS OF CENTER OF GRAVITY

[FOR 1.3 SECOND]

## Fig.19c

LOCUS OF CENTER OF GRAVITY

[FOR 1.3 SECOND]

# Fig.20

LOCUS OF CENTER OF GRAVITY

**European Patent Office**

**EUROPEAN SEARCH REPORT**

Application Number

EP 04 29 2233

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 260 949 A (NOKIA CORP) 27 November 2002 (2002-11-27) * paragraph [0001] - paragraph [0037] * * figures 1,4 * | 1-20 | H04M1/725 |
| X | US 2002/177471 A1 (HEMANUS JUHA ET AL) 28 November 2002 (2002-11-28) * paragraph [0001] - paragraph [0037]; figures 1,4 * | 1-20 | |
| A | US 2002/071058 A1 (SHIMUZU HIROFUMI) 13 June 2002 (2002-06-13) * paragraph [0046] - paragraph [0050] * | 1-20 | |
| A | EP 0 955 762 A (MITSUBISHI ELECTRIC CORP) 10 November 1999 (1999-11-10) * abstract * | 1-20 | |

TECHNICAL FIELDS SEARCHED (Int.Cl.7)

H04M

The present search report has been drawn up for all claims

| Place of search | Date of completion of the search | Examiner |
|---|---|---|
| Munich | 11 January 2005 | Pastore, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 29 2233

11-01-2005

| Patent document cited in search report | | Publication date | Patent family member(s) | | Publication date |
|---|---|---|---|---|---|
| EP 1260949 | A | 27-11-2002 | EP | 1260949 A1 | 27-11-2002 |
| | | | JP | 2003037653 A | 07-02-2003 |
| | | | US | 2002177471 A1 | 28-11-2002 |
| US 2002177471 | A1 | 28-11-2002 | EP | 1260949 A1 | 27-11-2002 |
| | | | JP | 2003037653 A | 07-02-2003 |
| US 2002071058 | A1 | 13-06-2002 | JP | 2002176494 A | 21-06-2002 |
| EP 0955762 | A | 10-11-1999 | WO | 9923801 A1 | 14-05-1999 |
| | | | EP | 0955762 A1 | 10-11-1999 |
| | | | US | 6388349 B1 | 14-05-2002 |

EPO FORM P0459